# EUROPEAN PATENT APPLICATION

(11) **EP 1 672 552 A1**
(43) Date of publication of application: **21.06.2006**
(21) Application number: 05107123.1
(22) Date of filing: 02.08.2005
(51) Int. Cl.: G06F 21/00

(54) **Independently installable component for measurement device**

(71) Applicant: Agilent Technologies Inc, Palo Alto, 5 94306 (US)
(72) Inventor: Siebrecht, Stephan, 76316, Malsch (DE)
(74) Representative: Barth, Daniel Mathias

(57) **Abstract**

An installation device (110) for installing a functional component (405) for a measurement device (130), wherein the installation device (110) is adapted to install the functional component (405) for the measurement device (130) using resources independent of other functional components (401 to 404) installed or installable for the measurement device (130).

## Description

### BACKGROUND ART

The present invention relates to a measurement device.

For operating a measurement device for example in the fields of life science, food science, or in the context of pharmaceutical development or production, it may be necessary that regulations defined by respective authorities have to be met. Otherwise, authorities might deny or retract a concession to operate and sell the measurement device in a corresponding jurisdiction.

For instance, in order to comply with the US Food and Drug Administration's (FDA) 21 CFR Part 11, reliable, robust and validatable communication between computers and measurement devices or analytical instruments has become increasingly important (see Code of the Federal Regulations, Title 21, Food and Drugs, Part 11 "Electronic Records; Electronic Signatures; Final Rule", *Federal Register* 62 (54), 13429-13466). Consequently, in a regulated environment like a measurement device operated in accordance with regulations of the FDA in the US (or corresponding authorities in Europe), there may be restrictions with respect to the authorization to access a computer of a measurement device after certification. Once certified, there may be strict limitations for modifying such a computer. In many cases, the installation of additional computer programs on a certified measurement device's computer will require recertification of the entire modified measurement device. However, there may be scenarios in which it may be desirable to implement additional functions on a certified measurement device.

### DISCLOSURE

It is an object of the invention to provide an improved measurement device. The object is solved by the independent claims. Exemplary embodiments are shown by the dependent claims.

According to an exemplary embodiment, an installation device for installing a functional component (for example a software application) for a measurement device (for example for installation on a control computer driving the measurement device or on the measurement device itself) is provided, wherein the installation device is adapted to install the functional component for the measurement device using resources (for example portions of a memory) independent (for example free of an interaction or a resource sharing) of other functional components (for example other software applications which are already stored on the memory) installed or installable for the measurement device.

According to another exemplary embodiment, a control apparatus (for example a control computer) for controlling a measurement device is provided, the control apparatus comprising a functional component (for example one or more software components) for controlling the measurement device, wherein the functional component is installed using resources independent of other functional components installed or installable for the measurement device.

According to still another exemplary embodiment, a measurement device is provided, the measurement device comprising a storage unit (for instance a hard disk) for storing a functional component, wherein the functional component is installed using resources independent of other functional components installed or installable on the storage unit of the measurement device.

According to yet another exemplary embodiment, a method of installing a functional component for operating a measurement device is provided, the method comprising installing the functional component for the measurement device using resources independent of other functional components installed or installable for the measurement device.

According to another exemplary embodiment, a computer-readable medium (for instance a CD, a DVD, a memory stick like a USB stick, a floppy disk, an external hard disk) is provided, on which a computer program of installing a functional component for operating a measurement device is stored, which computer program, when being executed by a processor (for instance a CPU of the measurement device or of a control apparatus for controlling the measurement device), is adapted to control or carry out installing the functional component for the measurement device using resources independent of other functional components installed or installable for the measurement device.

According to another exemplary embodiment, a program element of installing a functional component for operating a measurement device is provided, which program element, when being executed by a processor, is adapted to control or carry out installing the functional component for the measurement device using resources independent of other functional components installed or installable for the measurement device.

Embodiments of the invention can be partly or entirely embodied or supported by one or more suitable software programs, which can be stored on or otherwise provided by any kind of data carrier, and which might be executed in or by any suitable data processing unit. A fail-safety operation of a measurement device according to an embodiment can be realized by a computer program, i.e. by software, or by using one or more special electronic optimization circuits, i.e. in hardware, or in hybrid form, i.e. by means of software components and hardware components.

According to an exemplary embodiment, a functional component, for instance a software application, is installed in a regulated environment (as described above) to provide a particular function or service in the frame of the operation of a measurement device. The installation may be carried out such that no undesired interaction between the installed functional component and any other functional component occurs. Such an interaction may be in contradiction to limitations in the regulated environment or may negatively influence the proper working of the previously installed and/or the currently installed functional component. In other words, it may be ensured by an installation scheme according to an embodiment that no resources or common files are shared between the functional component to be installed and other pre-installed functional components. This may improve the fail safety of the system, since problems which may occur when a computer "automatically" installs and modifies shared data files without the control of a user might be avoided.

Particularly, when a measurement device has been certified for operation in a regulated environment (like a measurement device in compliance with the 21 CFR Part 11 of the FDA), and the programs installed on or for such a measurement device are in accordance with such regulations of the authorities, it may be problematic to install further applications on such a system. Namely, when installing a further application on such a certified system, for instance using a conventional "setup.exe" configuration, the installation procedure may generate or modify computer files (for instance ".DLL"-files) which are shared among different applications running on such a machine. Such a manipulation of already installed components may be in conflict with magisterial requirements. Moreover, such a manipulation may cause problems resulting from modifications of already installed files shared with other applications, since these pre-installed applications may have worked properly with the unchanged files, but not necessarily with the modified shared files.

In contrast to this, according to an embodiment, the memory resources assigned to different applications for the measurement device may be strictly separated and do not share any common files. This may make it possible to install further components for the measurement device without the danger that compliance with legal restrictions or user-defined requirements are violated.

For instance, an exemplary architecture according to an embodiment may include a control computer which is connected to a measurement device (for instance a capillary electrophoresis device) and which controls and/or monitors the functionality of the measurement device. Functional components providing this functionality may be stored on the control computer. Such functional components may be accessed via the control computer so that, as a result, the control computer may send control commands to the measurement device and may receive data streams from the measurement device which may be interpreted by the control computer.

In such a scenario, measurement routines for performing a particular measurement on the measurement device, diagnostic applications for diagnosing the action of the measurement device, evaluation routines for analyzing response data of the measurement device, or the like may be installed on the control computer for providing the functionality of the measurement device. However, when servicing such an application, a problem may occur during the operation of the measurement device. Such a problem may be diagnosed by means of diagnostic software which is already installed on the control computer. However, it may also happen that a more sophisticated diagnostic software can be required to analyze the error in the measurement device. In this case, when the measurement device is operated in a regulated environment, it may be inappropriate to install further diagnostic software on the control computer or in the measurement device, since this might violate regulations resulting from resource sharing between the further diagnostic software and other pre-installed programs.

According to an exemplary embodiment, such problems may be overcome by providing a diagnostic software tool and by installing such a tool on the control computer free from sharing resources with other applications. For thus purpose, the memory management during installation of such an additional software component can be performed such that no commonly shared or accessed computer files are generated during the installation.

One exemplary possibility of many possible ways of achieving this kind of installation is the so-called Click-Once^{TM} Technology developed by Microsoft^{TM}. Deploying the Click-Once ™ Technology in the context of a measurement device (particularly of a measurement device run in a regulated environment), it may be possible to install a routine on a control computer without any interaction with other components.

The mentioned Click-Once™ Technology may support applications to be downloaded and/or run via a network. Implementing the Click-Once™ Technology on a measurement device, diagnostic software may be installed by a single "click". The software itself may offer a new functionality and may be installable in an isolated manner, that is to say self-contained, and does therefore not break other applications. Implementing the Click-Once ™ Technology on a control device for controlling a measurement device may be particularly advantageous, since measurement devices are in many cases operating in a regulating environment. Employing the Click-Once™ Technology for software installation on a measurement device may have the further advantage that a user, for instance a service operator maintaining the measurement device, may install software by means of the Click-Once ™ Technology for the measurement device very easily.

The term "installation device" may particularly denote any kind of apparatus which is capable of installing the functional component for a measurement device. Such an installation device may thus comprise the necessary software elements for performing such an installation. The installation device may be a laptop device which is connectable to the measurement device or to a control device controlling the measurement device, or may even be a USB stick which is connected to a control computer or the measurement device for installing a software component thereon.

According to an embodiment, a system for operating devices in a strictly regulated environment is provided, which may allow the installation of additional program elements in compliance with FDA or other regulations. Thus, it may be avoided that, by means of modification of shared software elements, files are automatically and uncontrolledly modified by a computer which may destroy program elements and which may be in disagreement with requirements of such a regulated environment. In contrast to this, according to an embodiment, the installation of the functional component may be carried out without shared data files, so that an installation may be authorized without violating regulations of a regulated environment and by increasing the fail safety against undesired program corruption.

Thus, it may be avoided to constitute common resources. In contrast to this, different program may be installed so that no interaction occurs between those different applications.

It may be particularly advantageous for installing functional components on a measurement device to use rewritable data storage media as a source for the functional component(s), for instance an USB stick. It is possible to simply connect the rewritable data storage medium containing the installation program to a corresponding interface of the computer, to install the functional component without interaction with other computer applications. In the case of installing a diagnostic software, it may be additionally possible to directly rewrite the diagnostic data coming from the measurement device to the rewritable data storage medium. Then, the rewritable data storage medium (for instance a USB stick) may be removed from the interface connection and may be transported in a convenient manner to a place which is more suitable for evaluating the diagnostic data (for example an office of the user having installed the diagnostic software at a client's side).

According to an exemplary embodiment, a diagnostic software may be stored on a USB stick. Thus, diagnostic software may be installed for a measuring instrument. Thus, a conventional "setup.exe" installation with shared resources may be avoided. The installation may be carried out isolated from other applications. Thus, it is likely that such an installation scheme may be accepted for use in a regulated environment as well, without the need of recertification of the measurement system after the installation of the additional component. It is possible to simply start an executable file "xyz.exe" which may, for instance, be stored on a USB stick. Particularly in a scenario in which an appropriate browser is available, it may be advantageous to use the Click-Once™ Technology for installation.

Thus, it may be avoided according to an embodiment that an uncontrolled access to commonly shared files takes place during installation. In contrast to this, no common resources are shared by different applications.

For instance, the Food and Drug Administration (FDA) is a central authority in the US which strictly controls drug and food related products. For measurement devices like liquid chromatography devices employed in the research, development, production and monitoring of food and drugs, strict regulations of the FDA have to be met. After certification of such a measurement device compliant with such regulations, it may be out of compliance with FDA regulations that an additional application is installed which shares resources with other routines. According to an embodiment, such a common computer file sharing is avoided which allows, even after certification, to modify the installed applications on a control device for a measurement device without the necessity to recertify the measurement device again.

A typical scenario of implementing an embodiment of the invention is that a service engineer takes her or his own notebook to a client having a problem with a measurement device. The service engineer may then couple her or his own notebook to a control device controlling the measurement device or directly to the measurement device and may install, for instance using the Click-Once™ Technology, diagnostic software for diagnosing the status of the measurement device on the control device or on the measurement device. Thus, when a failure occurs in the measurement device, the service engineer, after having carried out the fast and easy installation of the diagnostic software, may carry out a diagnostic using the installed diagnostic software. Examples of failure are that a valve of the measurement device does not work properly, or a seal is no longer tight. In this case, the independently installed diagnostic software may carry out various test routines to determine the origin of the failure. In case of one of the above-mentioned failures, a diagnostic software installed on the PC without sharing resources with other programs installed on the PC may be used to detect the current failure. For instance, the device may then output the result "pump seal test not successfully passed". The service engineer may then repair the pump of the measurement device. After repair, the measurement device may be run without recertification, since the diagnostic software has been installed free from any functional overlap with other software tools installed on the measurement device. Thus, it may be ensured that the installation of the diagnostic software has no undesired impact on the other software tools.

Examples for software tools which may be installed by such a service engineer are the ChemStation™ software tool or the Cerity™ software tool. These software tools of Agilent™ Technologies are control applications which may capture data of a measurement device and which may evaluate this data, as well as provide a user interface for a user to communicate with the software tools. The ChemStation™ software tool is a decentralized approach for a direct communication between a personal computer and the instrument. The Cerity™ software tool uses is a more centralized approach of one or more decentralized personal computers coupled to measurement devices, however having access to a central data base. According to the Cerity™ software tool, one personal computer may control a plurality of measurement devices.

It is also possible that a measurement system according to an embodiment is supported by a call center. In case of a failure, a client may then contact a call center and ask for support. A support engineer may, for instance via the Internet or via an intranet, access the measurement device or a control PC controlling the measurement device in order to install additional diagnostic software on the control PC or directly on the measurement device. By means of such a system, it may be avoided that, in case of such a remote access, any of the other components which are already installed on the control PC or on the measurement device are influenced by the installation of the new component, since no commonly shared files are generated, modified or accessed by the additional component.

According to another scenario, a user may also access, for instance via the Internet, a homepage of a service provider. By means of an appropriate browser, the user may then directly download diagnostic software to be installed in an isolated manner on her or his PC or measurement device. It is possible that the user pays a certain amount of money for downloading such a diagnostic software.

Thus, an isolated installation of the diagnostic software may be carried out, so that the additionally installed diagnostic software does not share any resources with already pre-installed programs. Particularly, when installing the additional component, any access to already existing DLL-files may be prevented. All the files required for the installation may be copied in one and a single directory. An already existing installed version of a program can be updated, wherein such an update does not modify the old version, so that the new version is installed independently. The old version and the new version or such an update version of an application do not share any routines or files.

The installation device may be adapted to install the computer program for the measurement device on a control apparatus which is connectable to or which is integrated in the measurement device. In other words, the measurement device may be a self-sufficient device performing the measurement and simultaneously controlling itself. However, it is also possible that the control apparatus controls the measurement device, via a connection, for instance via a network, from a remote location.

According to an exemplary embodiment, it may be possible to a USB stick for installing software related to an operation of a measurement device in an autarkic manner. When such software is then executed to operate the measurement device, result data generated during the software execution may be directly written onto the USB stick acting as a portable memory element. The USB stick may then be transported easily to a user-defined location for further evaluation.

In the following, exemplary embodiments of the installation device will be described. However, these embodiments also apply for the measurement device, for the control apparatus, for the method of installing a functional component, for the computer-readable medium and for the program element.

The computer program may be at least one of the group consisting of a software element, a software library, a subroutine, a database, an executable file, and a source code. Thus, the term "computer program" may particularly denote any code which may be executed or used by a computer. Such a computer program may be executable independently. However, such a computer program may also be an element to be executed in combination with other software components, for instance a subroutine used by another computer program, or a library comprising a collection of program elements or data elements, or the like. The computer program may also be a database comprising database information (for instance a set of parameters specifying a more general diagnostic routine) to which another application may have access. The computer program may be in the form of source code which can be executed after a compilation or interpretation, or may be already precompiled executable code (for instance object code).

It is noted that the computer program may be installed for a measurement device without sharing memory resources occupied or accessed by other computer programs. However, even in such a scenario, it may be possible that such a computer program, during execution, accesses another computer program or is accessed by another computer program. Thus, the isolated installation of the computer program does not exclude possible links between this computer program and other computer programs.

The installation device may be adapted to install the computer program for the measurement device independently without sharing Dynamic Link Library files (".DLL"-files) accessed by or related to other computer programs installed or installable for the measurement device. Such Dynamic Link Library files may be, conventionally, accessed by a "setup.exe" routine when installing further components. According to an exemplary embodiment, the modification of Dynamic Link Library files during installation of an additional program element is prevented, so that undesired interference (and thus possible resulting failure) between different programs can be securely avoided. A dynamic linking system, which may include a Dynamic Link Library or ".DLL"-file, may place at least a part of linker code in an underlying operating system. At compile time, the linker records what libraries the executable needs and checks to make sure they are being called properly. When that program is then executed, a loader finds these libraries and links them at that point. The result may be called a dynamically linked library, sometimes refered to as a DLL. The term "Dynamic Link Library" may also be denoted as a functional group which may be accessed by Windows™ programs. Thus, a Dynamic Link Library may be denoted as some kind of library for a dynamic connection of files.

The functional component may be a diagnostic application for diagnosing a status of the measurement device. For instance, such a diagnostic application may be used to detect accurately the source or the item under failure of a complex measurement device. For this purpose, a diagnostic application may carry out one or more diagnostic routines. As a result of such a diagnostic routine, an output may be reported from the measurement device back to the diagnostic application allowing to determine the origin, cause or reason for failure.

The resources which are independently used for installing the functional component may be resources of a storage device. For instance, different portions or partitions of a hard disk may be managed in such a manner that different functional components use different portions of the memory, without sharing resources and thus without a memory overlap.

Installing may include implementing the functional component in such a manner on a hardware unit that the functional component can be executed by accessing the hardware unit. In other words, after having installed the functional component on the hardware unit, for instance on a control device, the functional component may be brought in a condition to be "ready for use", that is to say may be directly executed from this hardware unit.

The installation device may be at least one of the group consisting of a computer connectable to the control apparatus or the measurement device in a wired manner or in a wireless manner or via a wired or wireless network, and a once-writable memory or a read-only memory or a rewritable memory connectable to the control apparatus or the measurement device. The installation device may be for instance a laptop which can be coupled in a wireless or in a wired manner to a control computer or directly to the measurement device for providing the functional component on this device. Such a laptop computer may be located remotely from the control computer and/or the measurement device and may thus access the control computer and/or the measurement device via a network, for instance via a LAN, a WLAN, the Internet, or the like.

However, it is also possible to form the installation device simply as a memory which comprises computer files needed for the installation. Such a memory may be any kind of storage medium like a flash memory, a RAM memory, a ROM memory, an EEPROM, an FRAM memory, an SRAM memory, an MRAM memory, or the like. Such a storage element may also be realized as a compact memory card (for instance a flashcard) or as a USB stick, or any kind of replaceable cartridge that may be removably inserted for installation. It may be advantageous to adapt the installation device as a rewritable memory which can be connected via an interface to an apparatus on which the functional component shall be installed. In case of using such a rewritable memory, data resulting from executing the functional component can be directly rewritten to the memory so that this memory device uses as a source and a destination for providing the functional component and thus for storing results related to execution of the functional component.

The installation device may thus be adapted to store response data generated by the measurement device or by a control apparatus for controlling the measurement device in response to the execution of the functional component. Such response data may be rewritten directly on an installation device. When the installation device is a portable unit, for instance a USB stick, it may be possible to conveniently transport the received data from an installation location to a place for evaluating the received data. Thus, the installation device may be adapted as a portable installation device.

Particularly, the installation device may be adapted or designed to install an update version of the functional component for the measurement device independently without sharing resources with an older version of the functional component installed for the measurement device. Thus, problems with overwriting or modifying an old version so that the new version is executable which may yield problems due to the automatic and uncontrolled modification of files by the computer, may be avoided according to this embodiment, since a new version of a, for instance, diagnostic application, may be installed parallel to the old version.

In the following, further exemplary embodiments of the control apparatus will be described. However, these embodiments also apply for the installation device, for the measurement device, for the method of installing a functional component, for the computer-readable medium and for the program element.

Such a control apparatus may be a workstation. In the frame of this description, a "workstation" may denote any computer which can be connected to a measurement device. For instance, such a computer can be a conventional personal computer or a laptop or can also be a sophisticated server computer. In principle, the workstation can also be a mobile phone, a personal digital assistant or other any device which allows for central control of the measurement device.

The control apparatus may comprise a graphical user interface (GUI). Such a graphical user interface may include a display device (like a cathode ray tube, a liquid crystal display, a plasma display device or the like) for displaying information to a human operator, like data related to the execution of the functional component or test results of a measurement or of a diagnostic carried out in the measurement device. Further, a graphical user interface may comprise an input device allowing the user to input data (like data specifying or parameterizing a diagnostic routine) or to provide the system with control commands. Such an input device may include a keypad, a joystick, a trackball, or may even be a microphone of a voice recognition system. The GUI may allow a human user to communicate in a bidirectional manner with the system.

The control apparatus may comprise a storage unit for storing the functional component for controlling the measurement device. Such a storage unit may be, for instance, a hard disk when the storage unit is a personal computer or a laptop.

In the following, exemplary embodiments of the measurement device will be described. However, these embodiments also apply for the installation device, for the control apparatus, for the method of installing a functional component, for the computer-readable medium and for the program element.

The measurement device may be adapted for employment in a regulated environment. The term "regulated environment" may particularly denote any field of use in which the freedom to operate the measurement device is restricted by externally defined frame conditions, like legal restrictions which are issued by authorities and which have to be met to receive the permission to operate the measurement device in a corresponding territory. The term "regulated environment" may also denote an environment in which a certification of responsible authorities is required for using the measurement device. In other words, it may be necessary to certify the measurement device so that a use in a restricted environment is allowed. For example, when the measurement device shall be employed in the context of pharmaceutical research, development and production in the US, it may be necessary that the measurement device complies with FDA regulations (for example complies with the US Food and Drug Administration's (FDA) 21 CFR Part 11).

Particularly, the measurement device may be adapted to communicate with a control apparatus via at least one of a bus, a local area network, a controller area network, the Internet, HPIB and RS232. For instance, the communication may be carried out via the Internet. More generally, the communication may be carried out via a local area network (LAN), a control area network (CAN), HPIB (Hewlett Packard Interface Bus) or RS232. The communication may be performed by any desired wireless or wired network.

Particularly, the measurement device may be adapted to measure at least one physical, chemical, or biological parameter. Examples for physical parameters are temperature, pressure, volume, or the like. Examples for chemical parameters are a concentration of a component, a pH value of a liquid, or the like. Examples for biological parameters are the presence or absence of proteins or genes in a solution, the biological activity of a sample, or the like. According to the described embodiment, there may be an interaction between the measurement device and the external environment, wherein at least one of the corresponding environmental parameters may be sensed, detected or measured by the measurement device.

The measurement device may comprise at least one of a sensor device, a test device for testing a device under test or a substance, a device for chemical, biological and/or pharmaceutical analysis, a fluid separation system adapted for separating compounds of a fluid, a capillary electrophoresis device, a liquid chromatography device, a gas chromatography device, and a mass spectroscopy device. Exemplary application fields of the measurement device according to embodiments are gas chromatography, mass spectroscopy, UV spectroscopy, optical spectroscopy, IR spectroscopy, liquid chromatography, and capillary electrophoresis (bio-)analysis. The measurement device may be integrated in an analysis device for chemical, biological and/or pharmaceutical analysis. When the measurement device is a device for chemical, biological and/or pharmaceutical analysis, functions like (protein) purification, electrophoresis investigation of solutions, fluid separation, or chromatography investigations may be provided by such an analysis device.

### BRIEF DESCRIPTION OF DRAWINGS

Objects and many of the attendant advantages of embodiments of the present invention will be readily appreciated and become better understood by reference to the following more detailed description of embodiments in connection with the accompanied drawings. Features that are substantially or functionally equal or similar will be referred to by the same reference signs.

Fig. 1 to Fig .3 show exemplary embodiments of systems for installing a functional component for a measurement device.

Fig. 4 shows an exemplary embodiment of a storage management in a memory implemented in a system for installing a functional component for a measurement device according to an exemplary embodiment.

The illustration in the drawing is schematically.

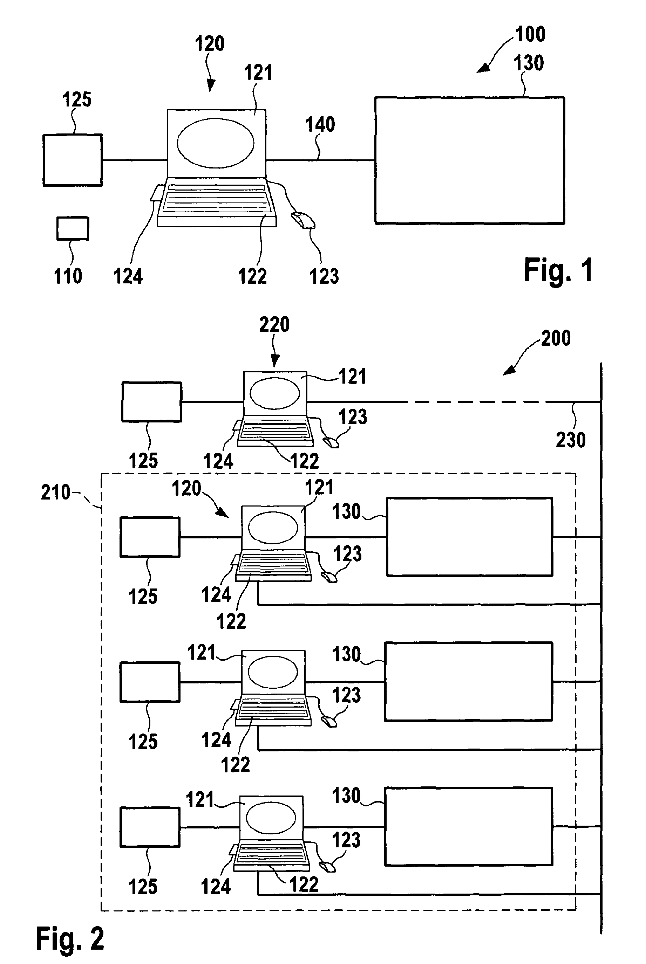

In the following, referring to Fig. 1, a system 100 for installing a functional component for a measurement device 130 according to an exemplary embodiment will be described.

The installation system 100 comprises an installation device 110, a control personal computer (PC) 120, and a fluid separation system 130 as a measurement device.

Although details are omitted in Fig. 1, the fluid separation system 130 is adapted for separating compounds of a fluid. The fluid separation system 130 may comprise a fluid delivering unit adapted for delivering a fluid (for instance an analyte to be analyzed), and a separation unit adapted for separating components of the fluid and to provide the at least one separated component for further use or analysis. In other words, the fluid separation system 130 is a measurement device which is capable of separating and analyzing different components of an analyte, for instance capable of separating different protein fractions of such an analyte.

The performance of the fluid separation system 130 is controlled by means of the control PC 120. The control PC 120 is connected via a bus 140 to the fluid separation system 130 for bidirectional communication. The control PC 120 comprises a monitor 121 via which a user may communicate with the personal computer 120. For this purpose, a keyboard 122 and a computer mouse 123 are provided as input means. A USB port 124 is provided as an interface of the control PC 120 so as to allow to insert a USB stick 110 in the control PC, for instance to provide the control PC 120 with data or to copy data from the control PC 120 to such a USB stick 110.

During "normal" operation of the fluid separation system 130, the control PC 120 provides the measurement device 130 with corresponding control information and control commands. For instance, a user may define - via the graphical user interface 121 to 123 - which measurement shall be carried out by the fluid separation system 130 and may further specify particular measurement parameters in accordance with her or his preferences.

These data may be processed by a CPU (central processing unit, not shown in Fig .1) of the control PC 120 for generating control commands which are sent to the fluid separation system 130 via the bus 140. In accordance with these control commands, the measurement routine specified by the user is carried out by the fluid separation system 130.

During the fluid separation carried out by the fluid separation system 130, an analysis of received data may be carried out. For instance, concentrations of different fractions of separated proteins may be determined by the fluid separation system 130. Such experimental or measurement results may be encoded in response signals which may be sent from the measurement device 130 back to the control PC 120. Via the control PC 120, a user may be supplied with these results, for instance while displaying these results on the display 121 and/or by printing these results on a printer 125 connected to the control PC 120.

However, during the operation of the fluid separation system 130, an error may occur in the fluid separation system 130. For instance, a capillary of the fluid separation system 130 may clog so that the fluid separation functionality of the measurement device 130 can no longer be fulfilled properly. Or, a seal of the fluid separation system 130 may be damaged so that fluids may leak out from the device 130. It may also happen that a valve controlling the transport of fluid through different channels of the fluid separation system 130 does not work properly any longer.

In order to detect the origin of such an error in the complicated measurement device 130, a diagnostic routine may be started from the control PC 120. During such a control or diagnostic routine, one or more diagnostic tests may be carried out under control of the control PC 120. Diagnostic software which may be required for carrying out such a diagnostic routine is stored on a hard disk (not shown in Fig. 1) of the control PC 120.

However, in case that the problem in the fluid separation system 130 turns out to be more difficult, it may be necessary to carry out a more sophisticated non-standard diagnostic routine. Software for such a more sophisticated diagnostic routine may not be pre-installed on the hard disk of the control PC 120.

In this case, it may be necessary to install the missing diagnostic routine on the control PC 120. However, the system 120, 130 is a regulated environment in which frame conditions have to be met when the system 120, 130 is modified.

For installing the missing diagnostic routine, the USB stick 110 is provided as an installation device. For this purpose, the installation device 110 is inserted in the USB port 124 of the control PC 120 for installing the sophisticated diagnostic software component for the fluid separation system 130 using memory resources independent of already pre-installed diagnostic software components which are installed on the control PC 120 for controlling the operation of the fluid separation system 130.

In other words, an installation software is stored on the USB stick 110 so that the additional diagnostic component is installed on the hard disk of the control PC 120 in such a manner that no common files or other memory resources are shared between already pre-installed components of diagnostic software and the additional diagnostic software to be installed from the USB stick 110 onto the hard disk of the control PC 120. By taking this measure, it may be avoided that common computer files (for instance ".DLL"-files) are automatically and uncontrollably modified by the control PC 120. Such a modification may be non-compliant with FDA requirements of the regulated system 120, 130.

According to the functionality of the installation device 110 being capable of independently installing the new diagnostic software on the hard disk of the control PC 120, no such undesired interference with already existing program files pre-installed on the control PC 120 may occur, and the installation of this additional diagnostic software for the certified measurement system 120, 130 may be compliant with official regulations.

After having installed the additional diagnostic software on the control PC 120, the diagnostic software can be executed, and the additionally installed diagnostic routine may be used to analyze in further detail the problem occurred at the fluid separation system 130. Then, this routine may be used to identify the problem of the fluid separation system 130, and reply data in accordance with this diagnostic routine may be sent via the bus 140 back to the control PC 120. Then, the results of this additional software component are displayable on the monitor 121 and/or are printable on a connected printer 125.

It may be dispensible that the system formed by components 120, 130 has to be certified again, since the additional component has been installed independently from already installed other software components, without commonly shared resources.

The diagnostic result data may be stored on the hard disk of the control PC 120 and/or may also be stored on the USB stick 110 as a rewritable memory inserted in the interface 124. Consequently, a service engineer can transport the mobile USB stick 110 to an appropriate location for a more detailed analysis of the results of the diagnostic experiment.

In the scenario of Fig. 1, the components 120, 130 are located close to one another, for instance in the same room or lab.

In the following, referring to Fig. 2, an installation system 200 according to an exemplary embodiment will be described.

The installation system 200 comprises components located remotely from one another, as will be described in the following.

In Fig. 2, a plurality of fluid separation systems 130 and assigned control PCs 120 are interconnected. These measurement systems 120, 130 are coupled with each another within a LAN 210 (Local Area Network). For instance, the different measurement systems 120, 130 may be located within the same biolab. Each of the control PCs 120 controls an assigned measurement device 130.

In addition to the configuration of Fig. 1, a server computer 220 is provided which is located remotely with respect to the components of the LAN 210, and which is connected to the components of the LAN 210 via the Internet 230.

In contrast to the more local controlling system 100 with a centralized configuration, the installation system 200 is a more decentralized system in which a communication is possible between the measurement systems 120, 130 on the one hand and the server computer 220 on the other hand.

In a scenario in which a user operating a control PC 120 wishes to install a more sophisticated diagnostic software compared to the already pre-installed diagnostic software on the control PC 120, it may access, via the internet 230 and a suitable browser, the server computer 220 which may have stored on a memory thereof, necessary installation software for installing the additionally required diagnostic component. A user may then send a download command to the server computer 220 so as to initiate a download of the components to be installed on the control PC 120. Such a download and subsequent installation may be carried out in such a manner that the installation generates new files on the hard disk of the control PC 120, but does not generate or modify any files pre-stored on the control PC 120. In other words, no resource sharing is initiated by the download and subsequent installation of the additional component from the server PC 220.

For instance, the components located within the WLAN 210 may be positioned at a client's side. In order to get support from a manufacturer, a computer 120 of the client side may be connected via the internet 230 to the manufacturer's server PC 220 supporting the client with diagnostic software.

For downloading the diagnostic software, a fee may be paid from the clients to the manufacturer, and such a fee may be paid in an electronic manner.

It is also possible, in the configuration of Fig. 2, that one or more of the control PCs 120 controls, in a more decentralized manner, one of the measurement devices 130 which is not directly connected and assigned to this control computer 120. For instance, the control PC 120 arranged in the upper portion of the LAN 210 may also be capable of controlling the functionality of the measurement device 130 in the medium or lower part of the LAN 210.

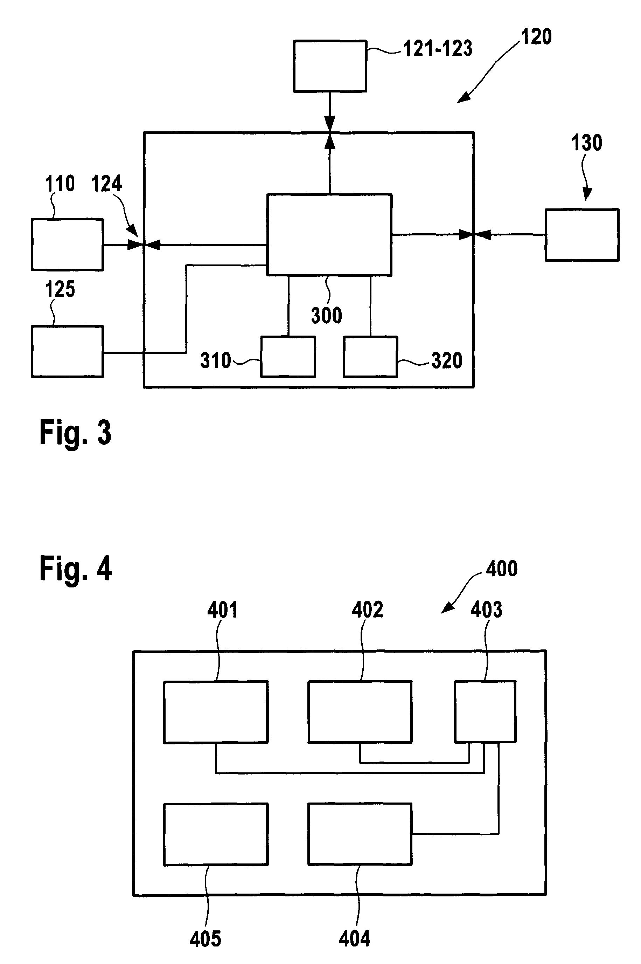

In the following, referring to Fig. 3, the detailed interior structure of the control PC 120 will be described in more detail.

The control PC 120 comprises a central processing unit (CPU) 300 which may be a microprocessor or the like. This CPU 300 is the heart of the control PC 120. The CPU 300 may communicate with the graphical user interface 121 to 123, with the printer 125, with the measurement device 130 and, via the USB port 124 acting as an interface, with the removably or detachably connectable USB stick 110. Furthermore, the control PC 120 comprises a ROM memory 310 and an EEPROM 320.

When the USB stick 110 is connected via the interface 124 to the CPU 300, data may be transferred from the USB stick 110 to the memories 310, 320, and vice versa. Then, an installation may be carried out in such a manner that components are installed on any of the memories 310, 320 without modifying already existing components and without memory resource sharing between the software to be installed from the USB stick 110 without already pre-installed software components occupying memory resources on one of the memories 310, 320. Thus, such an installation does not disturb a regulated environment and may make a further certification of the system of Fig. 3 dispensable.

Via the graphical user interface 121 to 123, a user may provide the CPU 300 with instructions as to how to perform the measurement routine and/or diagnostic routine, and the CPU 300 may then control the operation/diagnosis of the measurement device 130.

In the following, referring to Fig. 4, the memory management of a memory 400 on which an additional component has been installed according to an embodiment will be described.

The memory 400 has already pre-installed a first application 401 and a second application 402, for instance a first measurement routine and a second measurement routine, which share common files 403, namely DLL-files. A first diagnostic software tool 404 is already installed on the memory. As can be taken from Fig. 4, also the first diagnostic software 404 shares common resources with the applications 401, 402, namely the DLL-files 403.

Beyond this, Fig. 4 shows a second diagnostic software component 405 which has been installed according to an embodiment. This diagnostic software element 405 has been installed independently from the already installed resources 401 to 404 and has no influence on the DLL-files 403, and is not influenced by the DLL-files 403.

It should be noted that the term "comprising" does not exclude other elements or steps and the "a" or "an" does not exclude a plurality. Also elements described in association with different embodiments may be combined. It should also be noted that reference signs in the claims shall not be construed as limiting the scope of the claims.

## Claims

1. An installation device (110) for installing a functional component (405) for a measurement device (130),
wherein the installation device (110) is adapted to install the functional component (405) for the measurement device (130) using resources independent of other functional components (401 to 404) installed or installable for the measurement device (130).

2. The installation device (110) of claim 1,
wherein the functional component (405) is a computer program.

3. The installation device (110) of claim 2, comprising at least one of the following features:
the installation device (110) is adapted to install the computer program for the measurement device (130) on a control apparatus (120) which is connectable to or which is integrated in the measurement device (130);
the installation device (110) is adapted to install the computer program for the measurement device (130) independently without sharing computer files accessed by or related to other computer programs installed or installable for the measurement device (130);
the computer program is at least one of the group consisting of a software element, a software library, a subroutine, a database, an executable file, and a source code element;
the installation device (110) is adapted to install the computer program for the measurement device (130) independently without sharing Dynamic Link Library files (403) accessed by or related to other computer programs (401, 402, 404) installed or installable for the measurement device (130).

4. The installation device (110) of claim 1 or any one of the above claims, comprising at least one of the following features:
the functional component (405) is a diagnostic application for diagnosing a status of the measurement device (130);
the resources are memory resources of a storage device (310, 320) on which the functional component (405) is installed or installable;
the installation includes the implementation of the functional component (405) in such a manner on a hardware unit (120) that the functional component (405) can be executed by accessing the hardware unit (120);
the installation device is at least one of the group consisting of a computer (220) connectable to the control apparatus (120) or the measurement device (130) in a wired manner or in a wireless manner or via a wired or wireless network (210, 230), and a once-writable memory or a read-only memory or a rewritable memory (110) connectable to the control apparatus (120) or to the measurement device (130);
the installation device (110) is adapted to store response data provided by the measurement device (130) or by a control apparatus (120) for controlling the measurement device (130) in response to the execution of the functional component (405);
the installation device (110) is adapted as a portable installation device;
the installation device (110) is adapted to install an update version of the functional component (405) for the measurement device (130) independently without sharing resources with an older version of the functional component (405) installed for the measurement device (130).

5. A control apparatus (120) for controlling a measurement device (130), the control apparatus (120) comprising
a functional component (405) for controlling the measurement device (130), wherein the functional component (405) is installed using resources independent of other functional components (401 to 404) installed or installable for the measurement device (130).

6. The control apparatus (120) of claim 5,
comprising a storage unit (310, 320) for storing the functional component (405) for controlling the measurement device (130).

7. A measurement device (130), the measurement device (130) comprising
a storage unit for storing a functional component (405), wherein the functional component (405) is installed using resources independent of other functional components (401 to 404) installed or installable on the storage unit of the measurement device (130).

8. The measurement device (130) of claim 7, comprising at least one of the following features:
the measurement device (130) is adapted for employment in a regulated environment;
the measurement device (130) is adapted to communicate with a control apparatus (120) via at least one of a bus (140), a local area network (210), a controller area network, the internet (230), HPIB and RS232;
the measurement device (130) is adapted to measure at least one physical, chemical, or biological parameter;
the measurement device comprises at least one of a sensor device, a test device for testing a device under test or a substance, a device for chemical, biological and/or pharmaceutical analysis, a fluid separation system (130) adapted for separating compounds of a fluid, a capillary electrophoresis device, a liquid chromatography device, a gas chromatography device, an electronic measurement device, and a mass spectroscopy device.

9. A method of installing a functional component (405) for operating a measurement device (130), the method comprising
installing the functional component (405) for the measurement device (130) using resources independent of other functional components (401 to 404) installed or installable for the measurement device (130).

10. A computer-readable medium (110), in which a computer program of installing a functional component (405) for operating a measurement device (130) is stored, or a program element of installing a functional component (405) for operating a measurement device (130), which computer program or program element, when being executed by a processor (300), is adapted to control or carry out:
installing the functional component (405) for the measurement device (130) using resources independent of other functional components (401 to 404) installed or installable for the measurement device (130).
